# EUROPÄISCHE PATENTANMELDUNG

(11) **EP 3 282 329 A1**
(43) Veröffentlichungstag der Anmeldung: **14.02.2018**
(21) Anmeldenummer: 17182900.5
(22) Anmeldetag: 25.07.2017
(51) Int. Cl.: G05B 19/042, H04L 12/12

(54) **VERFAHREN UND SYSTEM ZUM FERNGESTEUERTEN BEDIENEN EINES FELDGERÄTS DER PROZESSAUTOMATISIERUNG**

(30) Priorität: 12.08.2016 DE 102016115013
(71) Anmelder: Endress + Hauser GmbH + Co. KG, 79689 Maulburg (DE)
(72) Erfinder: Palatini, Florian, 79692 Kleines Wiesental (DE); Haag, Tanja, 79650 Schopfheim (DE)
(74) Vertreter: Andres, Angelika Maria

(57) **Zusammenfassung**

Die Erfindung umfasst ein Verfahren und ein System zum ferngesteuerten Bedienen eines Feldgeräts (F1, F2, F3, F4) der Prozessautomatisierung, umfassend:
- Herstellen einer Kommunikationsverbindung zwischen einer Bedieneinheit (BE) und dem Feldgerät (F1, F2, F3, F4) über ein erstes Netzwerk (N1);
- Senden einer Zugriffsanfrage von einer Rechnereinheit (RE) an ein auf der Bedieneinheit (BE) ausgeführtes Anwendungsprogramm (AP) via einem zweiten Netzwerk (N2), wobei das Anwendungsprogramm (AP) zum Bedienen des Feldgeräts (F1, F2, F3, F4) dient;
- Bestätigen der Zugriffsanfrage durch das Anwendungsprogramm (AP); und
- Herstellen des Zugriffs der Rechnereinheit (RE) auf das Anwendungsprogramm (AP) über das zweite (N2) Netzwerk im Falle der Bestätigung der Zugriffsanfrage, wobei nach erfolgtem Zugriff die Bedienung des Feldgeräts (F1, F2, F3, F4) von der Rechnereinheit (RE) aus erfolgt.

## Beschreibung

Die Erfindung betrifft ein Verfahren zum ferngesteuerten Bedienen eines Feldgeräts der Prozessautomatisierung. Des Weiteren betrifft die Erfindung ein System zur Durchführung des erfindungsgemäßen Verfahrens.

Aus dem Stand der Technik sind bereits Feldgeräte bekannt geworden, die in industriellen Anlagen zum Einsatz kommen. In der Prozessautomatisierungstechnik ebenso wie in der Fertigungsautomatisierungstechnik werden vielfach Feldgeräte eingesetzt. Als Feldgeräte werden im Prinzip alle Geräte bezeichnet, die prozessnah eingesetzt werden und die prozessrelevante Informationen liefern oder verarbeiten. So werden Feldgeräte zur Erfassung und/oder Beeinflussung von Prozessgrößen verwendet. Zur Erfassung von Prozessgrößen dienen Messgeräte, bzw. Sensoren. Diese werden beispielsweise zur Druck- und Temperaturmessung, Leitfähigkeitsmessung, Durchflussmessung, pH-Messung, Füllstandmessung, etc. verwendet und erfassen die entsprechenden Prozessvariablen Druck, Temperatur, Leitfähigkeit, pH-Wert, Füllstand, Durchfluss etc. Zur Beeinflussung von Prozessgrößen werden Aktoren verwendet. Diese sind beispielsweise Pumpen oder Ventile, die den Durchfluss einer Flüssigkeit in einem Rohr oder den Füllstand in einem Behälter beeinflussen können. Neben den zuvor genannten Messgeräten und Aktoren werden unter Feldgeräten auch Remote I/Os, Funkadapter bzw. allgemein Geräte verstanden, die auf der Feldebene angeordnet sind.

Eine Vielzahl solcher Feldgeräte wird von der Endress+Hauser-Gruppe produziert und vertrieben.

In modernen Industrieanlagen sind Feldgeräte in der Regel über Kommunikationsnetzwerke wie beispielsweise Feldbusse (Profibus®, Foundation® Fieldbus, HART®, etc.) mit übergeordneten Einheiten verbunden. Normalerweise handelt es sich bei den übergeordneten Einheiten um Steuereinheiten, wie beispielsweise eine SPS (speicherprogrammierbare Steuerung) oder einen PLC (Programmable Logic Controller). Die übergeordneten Einheiten dienen unter anderem zur Prozesssteuerung, sowie zur Inbetriebnahme der Feldgeräte. Die von den Feldgeräten, insbesondere von Sensoren, erfassten Messwerte werden über das jeweilige Bussystem an eine (oder gegebenenfalls mehrere) übergeordnete Einheit(en) übermittelt, die die Messwerte gegebenenfalls weiterverarbeiten und an den Leitstand der Anlage weiterleiten. Der Leitstand dient zur Prozessvisualisierung, Prozessüberwachung und Prozessteuerung über die übergeordneten Einheiten. Daneben ist auch eine Datenübertragung von der übergeordneten Einheit über das Bussystem an die Feldgeräte erforderlich, insbesondere zur Konfiguration und Parametrierung von Feldgeräten sowie zur Ansteuerung von Aktoren.

Zur Bedienung der Feldgeräte sind entsprechende Bedienprogramme (Bedientools) notwendig, die auf den übergeordneten Einheiten entweder eigenständig ablaufen (Endress+Hauser FieldCare, Pactware, AMS Fisher-Rosemount, PDM Siemens) oder aber auch in Anwendungen des Leitstands (Siemens PCS7, ABB Symphony, Emerson Delta V) integriert sind. Unter dem Begriff Bedienen wird unter anderem ein Parametrieren des Feldgeräts, ein Updaten des Feldgeräts und/oder ein Abfragen und Visualisieren von Prozessdaten und/oder Diagnosedaten des Feldgeräts verstanden.

Vor der Inbetriebnahme und zur Wartung während des Betriebes des Feldgerätes beim Feldgerätebetreiber müssen die Feldgeräte parametriert werden. Zur Parametrierung, insbesondere zum Lesen und/oder Schreiben von Parametern, werden Bediengeräte eingesetzt. Derartige Bediengeräte stehen über eine Schnittstelle mit dem Feldgerät in Kommunikationsverbindung.

Von der Endress+Hauser-Gruppe wird mit der Produktreihe Micropilot FMR10/FMR20 , welche radarbasierte Füllstandsmessgeräte bezeichnet, erstmalig die Anwendungssoftware (App) SmartBlue verwendet. In den kommenden Jahren werden viele weitere Produktreihen ebenfalls die Anbindung an diese Anwendungssoftware ermöglichen. Mittels SmartBlue kann auf einfache Weise von einem mobilen Endgerät, wie einem Smartphone oder einem Tablet, via Bluetooth oder WLAN auf Feldgeräte zugegriffen werden. Mit Hilfe dieser Anwendungssoftware lassen sich Prozesswerte der Feldgeräte anzeigen und/oder eine Parametrierung der Feldgeräte vornehmen.

Die Parametrierung der Feldgeräte wird jedoch dadurch erschwert, dass die Anzahl der Parameter pro Feldgerät oftmals sehr groß ist. So sind einige Hundert Parameter für ein Feldgerät keine Seltenheit. Aus der Vielzahl der Parameter muss sich ein Nutzer die für seine Anwendung geeigneten Parameter heraussuchen und entsprechend parametrieren. Handelt es sich darüber hinaus noch um eine Automatisierungsanlage, in der eine Vielzahl von Feldgeräten installiert ist, so ist die Bedienung der Feldgeräte mit sehr hohem Aufwand verbunden.

Daher wird die Parametrierung in komplexen Anwendungsfällen nicht vom Anlagenbetreiber selbst vorgenommen. Zur Inbetriebnahme oder zu Wartungszwecken, bspw. wenn ein Feldgerät nicht wie gewünscht funktioniert, werden hierfür aus dem lokalen Vertrieb Servicetechniker angefordert, welche die Parametrierung für den Anlagenbetreiber übernehmen. Falls auch der Servicetechniker im Falle einer Wartung ein auftretendes Problem nicht lösen kann, so benötigt dieser Unterstützung von Servicetechnikern des Geräteherstellers.

Alle genannten Fälle erfordern seitens des Servicepersonals eine Reisetätigkeit, welche für den Anlagenbetreiber mitunter mit hohen Kosten und großem Zeitaufwand verbunden ist.

Ausgehend von dieser Problematik liegt der Erfindung liegt die Aufgabe zugrunde, ein Verfahren und ein System vorzustellen, welches es erlaubt, ein Feldgerät der Prozessautomatisierung zu bedienen, ohne dass sich der Bediener in der unmittelbaren Umgebung des Feldgeräts befinden muss.

Die Aufgabe wird durch ein Verfahren zum ferngesteuerten Bedienen eines Feldgeräts der Prozessautomatisierung gelöst, umfassend:
- Herstellen einer Kommunikationsverbindung zwischen einer Bedieneinheit und dem Feldgerät über ein erstes Netzwerk;
- Senden einer Zugriffsanfrage von einer Rechnereinheit an ein auf der Bedieneinheit ausgeführtes Anwendungsprogramm via einem zweiten Netzwerk, wobei das Anwendungsprogramm zum Bedienen des Feldgeräts dient;
- Bestätigen der Zugriffsanfrage durch das Anwendungsprogramm; und
- Herstellen des Zugriffs der Rechnereinheit auf das Anwendungsprogramm über das zweite Netzwerk im Falle der Bestätigung der Zugriffsanfrage, wobei nach erfolgtem Zugriff die Bedienung des Feldgeräts von der Rechnereinheit aus erfolgt.

Der große Vorteil des erfindungsgemäßen Verfahrens besteht darin, dass sich ein Bediener, beispielsweise ein Servicemitarbeiter, zum Bedienen eines Feldgeräts nicht in unmittelbarer Nähe zu dem Feldgerät befinden muss, sondern einen Remote Zugriff auf das Feldgerät erhält. Das Anwendungsprogramm wird virtuell auf der Rechnereinheit des Bedieners abgebildet, inklusive aller Funktionen des Anwendungsprogramms. Ein hilfesuchender Anlagenbetreiber verbindet sich vor Ort über seine Bedieneinheit mit dem Feldgerät. Der Bediener verbindet sich über seine Rechnereinheit mit der Bedieneinheit, erhält ein Abbild des Anwendungsprogramms auf seine Rechnereinheit und kann mit diesem Abbild das Feldgerät fernbedienen. Das Abbild des Anwendungsprogramms verhält sich identisch zu dem Anwendungsprogramm auf der Bedieneinheit. Tätigt der Bediener eine Eingabe auf dem Abbild des Anwendungsprogramms, beispielsweise das Schreiben eines Parameterwerts, so wird diese Eingabe auf dem Anwendungsprogramm der Bedieneinheit verarbeitet und eine entsprechende Aktion, in diesem Fall das Schreiben besagten Parameterwerts auf dem Feldgerät, durch die Bedieneinheit ausgelöst.

Dadurch, dass der Bediener, also beispielsweise ein Servicetechniker, sich nicht in unmittelbarer Umgebung des Feldgeräts befinden muss, können Reisetätigkeiten des Bedieners vermieden werden, was für den Anlagenbetreiber und/oder den Bediener vorteilhaft in puncto Zeit- und Kostenaufwand ist.

Hinsichtlich des Anwendungsprogramms handelt es sich insbesondere um eine Applikationsanwendung, welche auf einem mobilen Endgerät lauffähig ist. Ein solches Anwendungsprogramm wird von der Anmelderin unter der Bezeichnung SmartBlue angeboten.

Feldgeräte, welche in Verbindung mit dem erfindungsgemäßen Verfahren erwähnt werden, sind bereits im einleitenden Teil der Beschreibung beispielhaft beschrieben.

Eine bevorzugte Weiterbildung des erfindungsgemäßen Verfahrens sieht vor, dass die Rechnereinheit eine Anzeigeeinheit aufweist, welche zum Anzeigen von Informationen des Anwendungsprogramms ausgestaltet ist, wobei die auf der Anzeigeeinheit der Rechnereinheit angezeigten Informationen zu jedem Zeitpunkt identisch zu auf einer Anzeigeeinheit der Bedieneinheit angezeigten Informationen sind. Bei den Anzeigeeinheiten handelt es sich hinsichtlich der Bedieneinheit um ein LCD/LED-, Touchscreen-, um ein Head-up-Display oder um einen Projektor, hinsichtlich der Rechnereinheit um einen Monitor oder allgemein um einen Bildschirm. Bei den Informationen handelt es sich um verfügbare Parameter, bereits eingestellte Parameterwerte, Messdaten, Visualisierung der Messdaten etc., aber auch um Eingabefelder und Menüstrukturen.

Ebenso wird die Bedienoberfläche des Anwendungsprogramms auf der Anzeigeeinheit der Rechnereinheit abgebildet. Hierbei handelt es sich um das exakte Abbild der Bedienoberfläche, welche auf der Anzeigeeinheit der Bedieneinheit angezeigt ist.

Gemäß einer vorteilhaften Ausgestaltung des erfindungsgemäßen Verfahrens ist vorgesehen, dass der Zugriff der Rechnereinheit auf das Anwendungsprogramm verschlüsselt erfolgt. Sensible Informationen, wie beispielsweise Parametereinstellungen eines Feldgeräts oder aktuelle Prozesswerte, können dadurch sicher zwischen Rechnereinheit und Bedieneinheit übermittelt werden.

Gemäß einer besonders vorteilhaften Ausgestaltung des erfindungsgemäßen Verfahrens ist vorgesehen, dass zur Bestätigung des Zugriffs eine Passworteingabe in dem Anwendungsprogramm und/oder in der Rechnereinheit erfolgt. Ein Herstellen der Kommunikationsverbindung zwischen Bedieneinheit und einer Rechnereinheit Unbefugter wird hierdurch verhindert.

Gemäß einer vorteilhaften Weiterbildung des erfindungsgemäßen Verfahrens ist vorgesehen, dass der Zugriff auf einzelne, vorab definierte Programmteile des Anwendungsprogramms beschränkt wird. Es kann beispielsweise festgelegt werden, dass der Bediener nur Zugriff auf Parameter erhält, welche zur Lösung des aktuell aufgetretenen Problems benötigt werden. Darüber hinaus erhält der Bediener keinen Zugriff auf weitere Programme, Einstellungen oder Dateien der Bedieneinheit.

Eine bevorzugte Weiterbildung des erfindungsgemäßen Verfahrens sieht vor, dass das Bedienen ein Parametrieren des Feldgeräts, ein Updaten des Feldgeräts und/oder ein Abfragen und Visualisieren von Prozessdaten und/oder Diagnosedaten des Feldgeräts umfasst.

Gemäß einer besonders bevorzugten Weiterbildung des erfindungsgemäßen Verfahrens ist vorgesehen, dass die Bedieneinheit mittels einer Videokamera Videoaufnahmen erstellt, welche an die Rechnereinheit, insbesondere in Echtzeit, übertragen werden. Der Bediener erhält den Zugriff auf die Kamera jedoch nur im Rahmen der Anwendungssoftware. Ein Zugriff auf private Dateien, wie bspw. Fotoalben o.ä. wird nicht gewährt.

Gemäß einer weiteren bevorzugten Weiterbildung des erfindungsgemäßen Verfahrens ist vorgesehen, dass die Bedieneinheit mittels eines Mikrofons Audioaufnahmen erstellt, welche an die Rechnereinheit, insbesondere in Echtzeit, übertragen werden. In Kombination mit der Kamera der Bedieneinheit kann hierdurch eine Videotelefonie zwischen dem Anlagenbetreiber und dem Servicepersonal realisiert werden, welche die Problemlösung beschleunigen kann. Beispielsweise bittet das Servicepersonal den Anlagenbetreiber, die Kamera auf das zu bedienende Gerät zu richten. Durch das übertragene Videobild erkennt das Servicepersonal auf den ersten Blick, ob das Feldgerät richtig in der Messstelle der Anlage eingebaut wurde.

Des Weiteren wird die Aufgabe durch ein System zum Durchführen des erfindungsgemäßen Verfahrens gelöst, umfassend:
- zumindest ein Feldgerät der Prozessautomatisierung;
- eine Bedieneinheit, auf welcher ein Anwendungsprogramm zum Bedienen des Feldgeräts und/oder zum Anzeigen von Prozess- und/oder Diagnosedaten des Feldgeräts implementiert ist und ausgeführt wird, wobei die Bedieneinheit über ein erstes Netzwerk mit dem Feldgerät in einer erste Kommunikationsverbindung steht; und
- eine Rechnereinheit, welche derart ausgestaltet ist, dass die Rechnereinheit über ein zweites Netzwerk mit der Bedieneinheit in einer zweiten Kommunikationsverbindung steht und derart auf das Anwendungsprogramm der Bedieneinheit zugreift, dass die Rechnereinheit das Feldgerät mittels des Anwendungsprogramms bedient.

Eine bevorzugte Ausgestaltung des erfindungsgemäßen Systems sieht vor, dass die Bedieneinheit eine Videokamera aufweist, auf welche die Rechnereinheit zugreift. Die Videokamera ist bevorzugter Weise in der Bedieneinheit integriert. Alternativ ist die Videokamera eine separate Einheit und mittels eines Kabels oder mittels Funk mit der Bedieneinheit verbunden.

Eine weitere bevorzugte Ausgestaltung des erfindungsgemäßen Systems sieht vor, dass die Bedieneinheit ein Mikrofon aufweist, auf welches die Rechnereinheit zugreift.. Alternativ ist das Mikrofon eine separate Einheit, beispielsweise ein Headset, und ist mittels eines Kabels oder mittels Funk mit der Bedieneinheit verbunden.

In einer vorteilhaften Ausgestaltung des erfindungsgemäßen Systems ist vorgesehen, dass das erste Netzwerk ein drahtloses Netzwerk, insbesondere ein drahtloses Netzwerk mit geringer Reichweite, ist. Hierbei handelt es sich insbesondere um Bluetooth. Es kann sich aber auch um jeden weiteren drahtlosen Funkstandard, wie beispielsweise WLAN, ZigBee, etc. handeln. Es ist ebenso möglich die Kommunikationsverbindung zwischen dem Feldgerät und der Bedieneinheit über ein kabelgebundenes Netzwerk, insbesondere über eine serielle Datenverbindung oder über einen Feldbus der Automatisierungstechnik, herzustellen.

In einer vorteilhaften Ausgestaltung des erfindungsgemäßen Systems ist vorgesehen, dass das zweite Netzwerk ein drahtgebundenes Netzwerk oder ein drahtloses Netzwerk, insbesondere das Internet, ist. Beispiele für drahtlose Netzwerke sind WLAN, GSM, LTE, UMTS etc.

Sowohl bei dem ersten Netzwerk als auch bei dem zweiten Netzwerk kann vorgesehen sein, dass sich weitere Geräte, wie Router, Proxys, Gateways, etc. zwischen der Bedieneinheit und dem Feldgerät, bzw. zwischen der Bedieneinheit und der Rechnereinheit befinden, bzw. das erste und/oder das zweite Netzwerk durch Kombination einzelner drahtloser und/oder drahtgebundener Netzwerke gebildet wird.

Gemäß einer besonders vorteilhaften Weiterbildung des erfindungsgemäßen Systems ist vorgesehen, dass die Rechnereinheit eine Rechnereinheit auf Seiten des Geräteherstellers ist. Insbesondere handelt es sich hierbei um einen Service-PC, bzw. einen Laptop, ein Tablet, etc. in einem Helpdesk des Feldgeräteherstellers. Es kann sich aber auch um einen Service-PC auf Seiten des lokalen Vertriebs oder des Händlers handeln. Es ist ebenfalls möglich, dass sich ein Servicetechniker von unterwegs mit der Bedieneinheit verbindet, bspw. mittels seines Servicelaptops über eine GSM-Verbindung.

Gemäß einer besonders vorteilhaften Ausgestaltung des erfindungsgemäßen Systems ist vorgesehen, dass es sich bei der Bedieneinheit um ein mobiles Endgerät handelt. Insbesondere handelt es um ein Smartphone, ein Tablet oder um eine Datenbrille wie beispielsweise Google Glass . Es kann aber auch vorgesehen sein, das Anwendungsprogramm auf einem Laptop, oder auf einer mobilen Bedieneinheit wie dem von der Anmelderin produzierten und vertriebenen Field Xpert auszuführen.

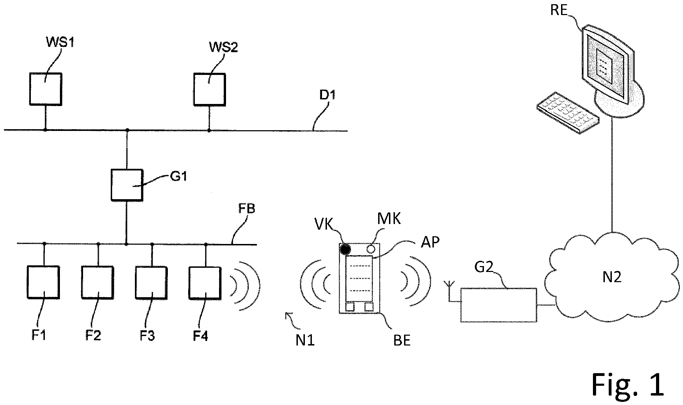

Die Erfindung wird anhand der nachfolgenden Figur näher erläutert. Es zeigt
- Fig. 1:: ein Ausführungsbeispiel des erfindungsgemäßen Verfahrens.

Fig. 1 zeigt ein Ausführungsbeispiel des erfindungsgemäßen Verfahrens.
Hierbei ist eine Anlage der Automatisierungstechnik dargestellt. An einem Datenbus D1 sind mehrere Workstation-PC WS1, WS2 in der Leitebene der Anlage angeschlossen. Diese Workstation-PCs dienen als übergeordnete Einheiten (Leitsystem bzw. Steuereinheit), unter anderem zur Prozessvisualisierung, Prozessüberwachung und zum Engineering wie zum Bedienen und Überwachen von Feldgeräten. Der Datenbus D1 arbeitet z. B. nach dem Profibus DP-Standard oder nach dem HSE (High Speed Ethernet)-Standard der Foundation Fieldbus. Über ein Gateway G1, das auch als Linking Device, Field Controller oder auch als Segment-Koppler bezeichnet wird, ist der Datenbus D1 mit einem Feldbus-Segment SM1 verbunden. Das Feldbus-Segment SM1 besteht aus mehreren Feldgeräten F1, F2, F3, F4, die über einen Feldbus FB miteinander verbunden sind. Bei den Feldgeräten F1, F2, F3, F4 kann es sich sowohl um Sensoren oder um Aktoren handeln. Der Feldbus FB arbeitet entsprechend nach einem der bekannten z.B. Feldbusstandards Profibus, Foundation Fieldbus oder HART.

Tritt ein Problem mit einem der Feldgeräte F1, F2, F3, F4 auf, oder soll ein neues Feldgerät in Betrieb genommen werden, so kontaktiert der Anlagenbetreiber den Helpdesk des Feldgeräteherstellers oder des Vertriebs. Üblicherweise wird daraufhin ein Servicetechniker zu der Anlage bestellt, welcher das Problem behebt. Eine komfortable Möglichkeit, um durch diese Methode entstehende Kosten zu vermeiden, bietet das erfindungsgemäße Verfahren:
Um ein Feldgerät F4 mittels des erfindungsgemäßen Verfahrens zu bedienen, wird in einem ersten Verfahrensschritt eine Kommunikationsverbindung zwischen dem Feldgerät F4 und einer Bedieneinheit BE über ein erstes Netzwerk N1 hergestellt. Bei der Bedieneinheit BE handelt es sich in diesem Ausführungsbeispiel um ein Smartphone. Ebenso denkbar ist, dass es sich bei der Bedieneinheit BE um ein Tablet, einen Laptop, den Endress+Hauser Field Xpert oder um eine Datenbrille, wie beispielsweise Google Glass , handelt.

Bei dem drahtloses Netzwerk handelt es sich um Bluetooth. Es kann aber auch jedes weitere drahtlose Netzwerk, insbesondere ein drahtloses Netzwerk mit geringer Reichweite, verwendet werden. Es ist ebenso möglich die Kommunikationsverbindung zwischen dem Feldgerät und der Bedieneinheit über ein kabelgebundenes Netzwerk, insbesondere über eine serielle Datenverbindung oder über den Feldbus FB der Automatisierungstechnik, herzustellen. Beispielsweise kann die Bedieneinheit BE direkt an den Feldbus FB angeschlossen werden und über diesen mit dem Feldgerät F4 kommunizieren.

Auf der Bedieneinheit BE ist ein Anwendungsprogramm AP integriert und wird von der Bedieneinheit BE ausgeführt. Bei dem Anwendungsprogramm AP handelt es sich um die App SmartBlue , welche von der Anmelderin vertrieben wird. Diese App ermöglicht die Bedienung des Feldgeräts F4, insbesondere können Prozesswerte visualisiert und das Feldgerät F4 parametriert werden.

Des Weiteren ist die Bedieneinheit BE mit einem zweiten Netzwerk N2, dem Internet verbunden. Der Zugriff auf dieses erfolgt drahtlos mittels WLAN auf einen Router/Gateway G2, welcher mit einem Kabel mit dem Internet N2 verbunden ist. Alternativ ist die Bedieneinheit BE per Mobilfunk, insbesondere mittels UMTS, GSM, oder LTE mit dem Internet N2 verbunden.

In einem zweiten Verfahrensschritt sendet eine Rechnereinheit RE per Internet eine Zugriffsanfrage an das Anwendungsprogramm AP. Bei der Rechnereinheit RE handelt es um einen Service-PC in einem Helpdesk des Geräteherstellers oder um einen PC eines Servicetechnikers des Kundens. Diese Zugriffsanfrage erfolgt verschlüsselt. Das Anwendungsprogramm AP zeigt nach Erhalt der Zugriffsanfrage ein Dialogfenster zum Bestätigen der Zugriffsanfrage an.

In einem dritten Verfahrensschritt bestätigt der Anlagenbetreiber, welcher der Bediener der Bedieneinheit BE ist, die Zugriffsanfrage. Alternativ oder zusätzlich kann eine Passworteingabe von Seiten der Bedieneinheit BE oder der Rechnereinheit RE erforderlich sein. Nach Bestätigung der Zugriffsanfrage wird in einem dritten und letzten Verfahrensschritt eine Kommunikationsverbindung zwischen der Bedieneinheit BE und der Rechnereinheit RE über das Internet N2 aufgebaut. Die Rechnereinheit RE greift nun auf das Anwendungsprogramm AP zu. Hierbei wird das Anwendungsprogramm AP virtuell auf der Rechnereinheit RE abgebildet, indem die Bedienoberfläche des Anwendungsprogramms AP auf der Anzeigeeinheit der Rechnereinheit RE abgebildet wird. Hierbei handelt es sich um das exakte Abbild der Bedienoberfläche, welche auf der Anzeigeeinheit der Bedieneinheit BE visualisiert ist.

Wird nun auf der Rechnereinheit RE eine Eingabe auf dem Abbild des Anwendungsprogramms AP getätigt, beispielsweise das Schreiben eines Parameterwerts, so wird diese Eingabe auf dem Anwendungsprogramm AP der Bedieneinheit BE verarbeitet und die entsprechende Aktion, also das Schreiben besagten Parameterwerts auf dem Feldgerät FE, durch die Bedieneinheit BE ausgelöst.

Über ein in der Bedieneinheit BE implementiertes Mikrofon MK kann der Anlagenbetreiber mit dem Servicepersonal des Helpdesks sprechen. Hierzu erteilt das Anwendungsprogramm AP dem Bediener an der Rechnereinheit RE einen Zugriff auf das Mikrofon. Auch hier kann eine Bestätigungsaufforderung an den Anlagenbtreiber, welcher die Bedieneinheit BE bedient, erfolgen.

Mittels einer in der Bedieneinheit BE eingebauten Videokamera VK kann zusätzlich ein Videochat erfolgen. Hierzu erteilt das Anwendungsprogramm AP dem Bediener an der Rechnereinheit RE einen Zugriff auf die Videokamera VK der Bedieneinheit. Auch hier kann eine Bestätigungsaufforderung an den Anlagenbetreiber, welcher die Bedieneinheit BE bedient, erfolgen. Auch ist es möglich, dass der Anlagenbtreiber von dem Servicepersonal aufgefordert wird, die Bedieneinheit BE in einer bestimmte Position auszurichten, um ein Video der örtlichen Gegebenheiten oder bezüglich des Einbaus des Feldgeräts F4 in der Anlage zu erhalten.

Mit Hilfe des erfindungsgemäßen Verfahrens ist es somit möglich, ein Feldgerät F1, F2, F3, F4 zu bedienen, ohne dass sich der Bediener in unmittelbarer Nähe zu dem Feldgerät F1, F2, F3, F4 befinden muss. Unter dem Begriff Bedienen wird unter anderem ein Parametrieren des Feldgeräts, ein Updaten des Feldgeräts und/oder ein Abfragen und Visualisieren von Prozessdaten und/oder Diagnosedaten des Feldgeräts verstanden.

Es versteht sich von selbst, dass das erfindungsgemäße Verfahren und das erfindungsgemäße System auf jegliche Art und Anzahl von Feldgeräten FG anwendbar ist und nicht auf die in den Figuren Fig. 1 und Fig. 2 gezeigten Ausführungsbeispiele beschränkt ist.

### Bezugszeichenliste

- AP: Anwendungsprogramm
- BE: Bedieneinheit
- D1: Datenbus
- F1, F2, F3, F4: Feldgerät
- FB: Feldbus
- G1, G2: Gateway
- MK: Mikrofon
- N1: erstes Netzwerk
- N2: zweites Netzwerk
- RE: Rechnereinheit
- VK: Videokamera
- WS1, WS2: Workstation-PC

## Patentansprüche

1. Verfahren zum ferngesteuerten Bedienen eines Feldgeräts (F1, F2, F3, F4) der Prozessautomatisierung, umfassend:
- Herstellen einer Kommunikationsverbindung zwischen einer Bedieneinheit (BE) und dem Feldgerät (F1, F2, F3, F4) über ein erstes Netzwerk (N1);
- Senden einer Zugriffsanfrage von einer Rechnereinheit (RE) an ein auf der Bedieneinheit (BE) ausgeführtes Anwendungsprogramm (AP) via einem zweiten Netzwerk (N2), wobei das Anwendungsprogramm (AP) zum Bedienen des Feldgeräts (F1, F2, F3, F4) dient;
- Bestätigen der Zugriffsanfrage durch das Anwendungsprogramm (AP); und
- Herstellen des Zugriffs der Rechnereinheit (RE) auf das Anwendungsprogramm (AP) über das zweite (N2) Netzwerk im Falle der Bestätigung der Zugriffsanfrage, wobei nach erfolgtem Zugriff die Bedienung des Feldgeräts (F1, F2, F3, F4) von der Rechnereinheit (RE) aus erfolgt.

2. Verfahren nach Anspruch 1, wobei die Rechnereinheit (RE) eine Anzeigeeinheit aufweist, welche zum Anzeigen von Informationen des Anwendungsprogramms (AP) ausgestaltet ist, wobei die auf der Anzeigeeinheit der Rechnereinheit (RE) angezeigten Informationen zu jedem Zeitpunkt identisch zu auf einer Anzeigeeinheit der Bedieneinheit (BE) angezeigten Informationen sind.

3. Verfahren nach zumindest einem der Ansprüche 1 oder 2, wobei der Zugriff der Rechnereinheit (RE) auf das Anwendungsprogramm (AP) verschlüsselt erfolgt.

4. Verfahren nach zumindest einem der vorherigen Ansprüche, wobei zur Bestätigung des Zugriffs eine Passworteingabe in dem Anwendungsprogramm (AP) und/oder in der Rechnereinheit (RE) erfolgt.

5. Verfahren nach zumindest einem der vorherigen Ansprüche, wobei der Zugriff auf einzelne, vorab definierte Programmteile des Anwendungsprogramms (AP) beschränkt wird.

6. Verfahren nach zumindest einem der vorherigen Ansprüche, wobei das Bedienen ein Parametrieren des Feldgeräts (F1, F2, F3, F4), ein Updaten des Feldgeräts (F1, F2, F3, F4) und/oder ein Abfragen und Visualisieren von Prozessdaten und/oder Diagnosedaten des Feldgeräts (F1, F2, F3, F4) umfasst.

7. Verfahren nach zumindest einem der vorherigen Ansprüche, wobei die Bedieneinheit (BE) mittels einer Videokamera (VK) Videoaufnahmen erstellt, welche an die Rechnereinheit (RE), insbesondere in Echtzeit, übertragen werden.

8. Verfahren nach zumindest einem der vorherigen Ansprüche, wobei die Bedieneinheit (BE) mittels eines Mikrofons (MK) Audioaufnahmen erstellt, welche an die Rechnereinheit (RE), insbesondere in Echtzeit, übertragen werden.

9. System zum Durchführen des Verfahrens nach zumindest einem der Ansprüche 1 bis 8, umfassend:
- zumindest ein Feldgerät (F1, F2, F3, F4) der Prozessautomatisierung;
- eine Bedieneinheit (BE), auf welcher ein Anwendungsprogramm (AP) zum Bedienen des Feldgeräts (F1, F2, F3, F4) und/oder zum Anzeigen von Prozess- und/oder Diagnosedaten des Feldgeräts (F1, F2, F3, F4) implementiert ist und ausgeführt wird, wobei die Bedieneinheit (BE) über ein erstes Netzwerk (N1) mit dem Feldgerät (F1, F2, F3, F4) in einer ersten Kommunikationsverbindung steht; und
- eine Rechnereinheit (RE), welche derart ausgestaltet ist, dass die Rechnereinheit (RE) über ein zweites Netzwerk (N2) mit der Bedieneinheit (BE) in einer zweiten Kommunikationsverbindung steht und derart auf das Anwendungsprogramm (AP) der Bedieneinheit (BE) zugreift, dass die Rechnereinheit (RE) das Feldgerät (F1, F2, F3, F4) mittels des Anwendungsprogramms (AP) bedient.

10. System nach Anspruch 9, wobei die Bedieneinheit (BE) eine Videokamera (VK) aufweist, auf welche die Rechnereinheit (RE) zugreift.

11. System zumindest einem der Ansprüche 9 oder 10, wobei die Bedieneinheit (BE) ein Mikrofon (MK) aufweist, auf welches die Rechnereinheit (RE) zugreift.

12. System nach zumindest einem der Ansprüche 9 bis 11, wobei das erste Netzwerk (N1) ein drahtloses Netzwerk, insbesondere ein drahtloses Netzwerk mit geringer Reichweite, ist.

13. System nach zumindest einem der Ansprüche 9 bis 12, wobei das zweite Netzwerk (N2) ein drahtgebundenes Netzwerk oder ein drahtloses Netzwerk, insbesondere das Internet, ist.

14. System nach zumindest einem der Ansprüche 9 bis 13, wobei die Rechnereinheit (RE) eine Rechnereinheit auf Seiten des Geräteherstellers ist.

15. System nach zumindest einem der Ansprüche 9 bis 14, wobei es sich bei der Bedieneinheit (BE) um ein mobiles Endgerät handelt.
